# EUROPEAN PATENT SPECIFICATION

(11) **EP 0 700 515 B1**
(45) Date of publication and mention of the grant of the patent: **06.09.2000**
(21) Application number: 94916325.7
(22) Date of filing: 27.05.1994
(51) Int. Cl.: G01N 21/88, B07C 5/342

(54) **AN AUTOMATIC INSPECTION APPARATUS**
AUTOMATISCHES INSPEKTIONSGERÄT
DISPOSITIF D'INSPECTION AUTOMATIQUE

(30) Priority: 28.05.1993 GB 9311094; 03.02.1994 GB 9402064
(43) Date of publication of application: 13.03.1996
(73) Proprietor: MILLENNIUM VENTURE HOLDINGS LTD., Swaffham Bulbeck, Cambridge CB5 0NA (GB)
(72) Inventor: DALZIEL, Marie, Rosalie, London W8 6QP (GB); PHILLIPS, David John, Reach, Cambridge CB5 0JJ (GB); GRANGE, Adrian William, Great Wilbraham, Cambridge VB1 5JN (GB); MITCHELL, Nigel John, Burwell, Cambridge CB5 0AB (GB); HUMPHREY, David, Cambridge CB1 5HA (GB)
(74) Representative: Milhench, Howard Leslie
(86) International application number: GB9401166
(87) International publication number: WO9428397

(56) References cited:
- EP-A- 0 398 781
- US-A- 4 486 776
- US-A- 4 695 157
- US-A- 4 760 444
- US-A- 4 882 498
- US-A- 5 051 872
- US-A- 5 187 611

## Description

### Field of the Invention:

This invention relates to an automatic inspection apparatus for classifying an article according to a surface characteristic of the article and particularly, though not exclusively, to an automatic inspection apparatus for classifying ceramic or plastics material tiles or the like.

### Background of the Invention:

In the field of decorative ceramic tile manufacture, tiles are known which have decorative surfaces that are designed to imitate natural materials, for example stone, granite or marble. The classification of these and other kinds of ceramic tiles, which is necessary to ensure that tiles generally match each other, is carried out by trained personnel who look at the decorative tile surface as a whole and make a subjective judgement as to its classification, for example in order to sort tiles into different groups which generally have similar surface characteristics. The mental process by which these trained people can perform the classification is complex and it is often the case that they themselves cannot explain what steps they carry out in order to arrive at a classification judgement. It is a relatively straightforward matter for a trained person to check that primary features of a decorative surface, for example geometric or line patterns, are present and correct, but the matter becomes much more subjective when it comes to checking tile surfaces which do not have any predetermined pattern, for example the stone, granite or marble effect tiles abovementioned.

Even through this type of classification seems to be a difficult task, in most cases a tile can be classified by a trained person very quickly and without too much effort. However, there are significant problems associated with human classification which act to limit the throughput of the classification process when used in tile manufacturing. Some of these problems are a possible lack of consistency, limited classification time periods due to operator fatigue, sensitivity to the working environments that commonly are found in a tile manufacturing factory and high labour costs.

Image analysis of articles for automated classification purposes is known from e.g. US-A-4882498, US-A-4695157, US-A-4760444, US-A-4486776 and EP-A-0398781

### Objects and Summary of the Invention:

The present invention aims to provide an automatic inspection apparatus with improved classification of the articles by sophisticated processing of the image signals. The invention is defined in Claim 1.

The conveying means preferably is arranged to convey the article through said chamber at a constant speed and the camera is a high speed camera arranged to capture a high definition image of the surface of the article as it moves through the chamber. The apparatus may further comprise controlling means for controlling the operation of the camera, monitoring the environmental conditions within the chamber, and communicating with processing apparatus the result of the classification procedure carried out by the processing means, and position determining means may be provided for tracking the movement of articles into, through and out of the chamber, the camera capture operation preferably being dependent upon outputs from said position determining means.

The chamber is preferably arranged to inhibit the entry of light into the chamber from outside of the chamber and further comprises substantially non-reflective light-absorbing internal walls, and the illumination means preferably comprises a plurality of lamps arranged as a light source and a diffusion structure for providing diffuse light within the chamber. The diffusion structure might for example comprise a coarse diffuser, a mirror and a fine diffuser, the mirror receiving light scattered by the coarse diffuser and reflecting the same to the fine diffuser. The camera is preferably positioned so that when an article is located at a predetermined position in the chamber the camera will receive only non-specularly reflected diffuse light from the surface of said article, and there may be filter means associated with said camera to optimize its sensitivity to the visible region of the electromagnetic spectrum.

The camera itself preferably comprises a zoom lens and has controllable zoom, focus and aperture facilities, and a calibration reference may be provided in said chamber for enabling calibration of the camera. Furthermore, means are preferably provided for enabling the camera image to be compensated to negate the effect of artefacts such as might for example arise due to non-uniform illumination of the workpiece or to compensate for variations in the output of various camera pixels. Means may also be provided for inhibiting contamination of surfaces in said chamber with dust.

An automatic inspection apparatus according to the present invention may be used in conjunction with a mechanical sorting device responsive to said automated inspection apparatus for physically sorting articles on the basis of the classification thereof as determined by said automatic inspection apparatus.

The above and further features of the present invention are set forth with particularity in the appended claims and together with the advantages thereof should become clearer from consideration of the following detailed description of exemplary embodiments of the invention given with reference to the accompanying drawings.

### Brief Description of the Drawings:

Figure 1 is a schematic block diagram of a first embodiment of an automatic sorting apparatus according to the present invention;
Figure 2 is a schematic sectional view of the image capture chamber of the automatic sorting apparatus of Figure 1;
Figure 3 is a flow diagram showing the operation of a classifier program during a training period;
Figure 4 is a flow diagram showing the operation of the classifier program during a runtime period;
Figure 5 is a view from a camera in the image capture chamber of calibration objects that are provided to enable camera calibration;
Figure 6 is a flow diagram showing various processing stages that are involved in calibrating the zoom of a camera forming part of the automatic sorting apparatus of Figure 1;
Figure 7 is a flow diagram showing the various processing stages that are involved in calibrating the focus of the camera;
Figure 8 is a flow diagram showing a first part of a calibration procedure for the aperture of the camera;
Figure 9 is a flow diagram showing a second part of the calibration procedure for the aperture of the camera;
Figures 10A and 10B are respective end and side elevation views of an exemplary automatic inspection apparatus according to Figure 1;
Figure 11 is a schematic block diagram of another embodiment of an automatic sorting apparatus according to the present invention;
Figure 12 is a schematic sectional view of the image capture chamber and the tile transport means of the automatic sorting apparatus of Figure 11;
Figure 13 is a schematic overhead view of the tile tracking means of the automatic sorting apparatus of Figure 11;
Figure 14 is a schematic sectional view of a further automatic sorting apparatus embodying the present invention; and
Figure 15 is a schematic overhead view of the tile transport means and imaging window of the automatic sorting apparatus of Figure 14.

### Detailed Description of the Embodiments:

There will first be described an automatic inspection apparatus according to a first embodiment of the invention which can be used for classifying an article, a ceramic tile for example, according to surface characteristics of the article.

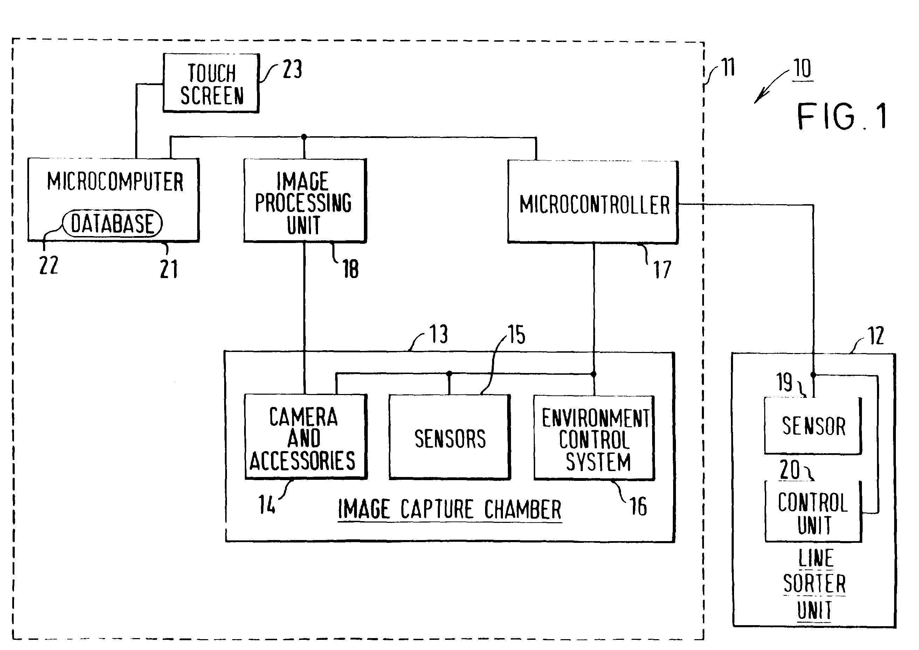

Referring to Figure 1 of the accompanying drawings, an automatic apparatus 10 for inspecting and sorting decorative ceramic tiles or the like according to their surface characteristics is shown. The apparatus 10 comprises an inspection apparatus 11 and a line sorter (diverting and stacking) unit 12. The line sorter 12 physically groups together tiles which have the same classification of surface characteristics but has no facilities for independently determining the class of each tile. Instead, the line sorter unit 12 is responsive to classification signals generated by the inspection apparatus 11 for performing the sorting function. Line sorter units 12 are well known in the art and need no further explanation herein.

The inspection apparatus 11 includes an image capture chamber 13 through which ceramic tiles are conveyed before they reach the line sorter unit 12. As the tiles pass through the chamber 13, a video camera 14 located within the chamber 13 captures a digital electronic image of the decorative surface of each tile. The conditions under which the image is captured are monitored by sensors 15 and are strictly controlled by an environmental control system 16. Signals from the sensors 15 are sent to a microcontroller 17 which provides fault diagnosis and control for both the video camera 14 and the environmental control system 16 as will be described hereinafter.

The captured image is processed by an image processing unit 18 which evaluates the image. The results of the evaluation are used to classify the respective tile and this classification information is sent to the microcontroller 17. The microcontroller 17 monitors a sorter sensor 19 located on the line sorter unit 12, to detect when to output from the microcontroller 17 to the control unit 20 of the sorter unit 12, the classification information relating to that particular tile.

Supervisory control of the automated sorting apparatus 10 is provided by a host micro-computer (PC) 21 which effects non-volatile storage of programs and data which are used to process the captured digital electronic image in order to classify the article. The micro-computer 21 also stores a database 22 of intonation which is used to configure the image processing unit 18 and the microcontroller 17. Although the sorting system 10 is arranged to function automatically, there is still a small amount of high level user interaction required and for this purpose a user interface in the form of touch screen 23 is provided.

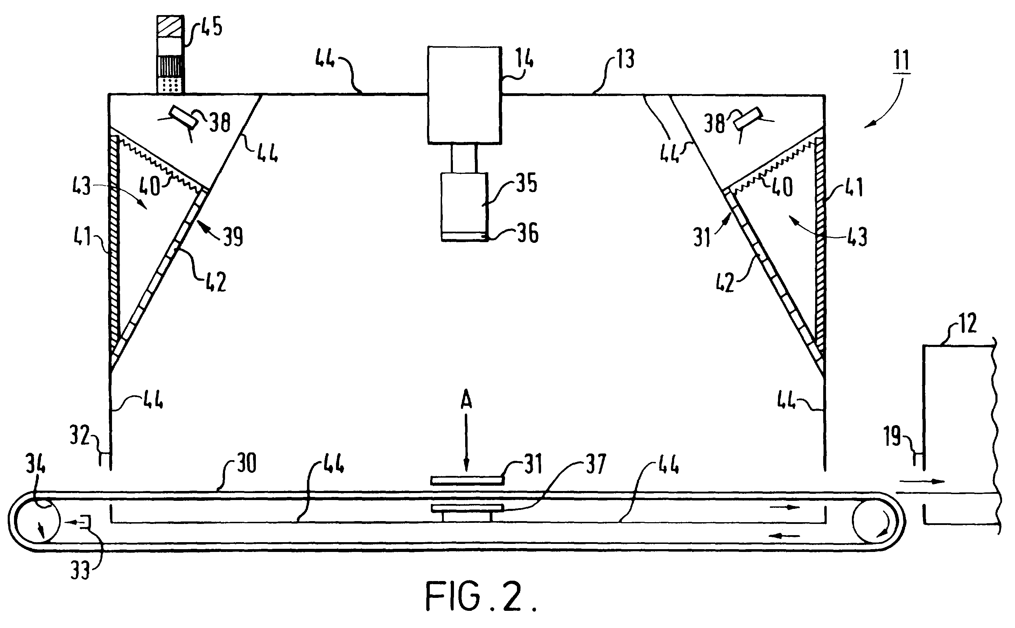

Referring now to Figure 2, a continuous conveyor belt 30 transports a ceramic tile 31 through the image capture chamber 13 at a constant speed of for example 1.0 m/s. An input sensor 32 determines the presence of the ceramic tile 31 at the input of the chamber 13 and a shaft encoder 33 works in conjunction with a conveyor belt pulley 34 to track the movement of the tile 31 into, through and out of the chamber 13.

The inspection apparatus is designed to classify the tile 31 without stopping the conveyor belt 30. This provides a significant advantage over human inspection in that tiles can be sorted faster and without operator fatigue.

The video camera 14 is situated perpendicularly above a position A along the conveyor belt 30 so that when the tile 31 has travelled to the position A, as determined from the outputs of input sensor 32 and shaft encoder 33, the video camera 14 is triggered to capture a single frame image of the ceramic tile surface. An exposure time of approximately 1 ms is required to accurately capture a useable high-definition image of the tile surface. The selected exposure time takes into consideration the capabilities of the video camera 14. Problems such as frame shift smears are more pronounced at shorter exposures, while the motion blur associated with capturing an image of the moving tile 31 is reduced by shorter exposures. The video camera 14 incorporates a monochromatic charge coupled device sensing element which has a resolution of 512 X 512 pixels. An analogue output signal is generated by the video camera 14, which is sent to the image processing unit 18 (shown in Figure 1) where it is amplified, off-set adjusted and filtered before being converted into a digital signal via an analogue to digital converter (digitiser) (not shown).

The video camera 14 is used in conjunction with a controllable zoom lens 35 which can vary the field of view of the video camera 14 in order to adapt the size of the captured image to the various sizes of ceramic tile 31 which can be inspected. In this regard, a variable camera focus is also required as changing the zoom setting often requires resetting of the focus. Variable tile thickness and variable tile brightness are also accommodated by virtue of the video camera 14 having a software controllable focus, gain and aperture.

The charge coupled device sensing element of the video camera 14 is highly sensitive to infra-red (IR) light wavelengths. However, the apparatus is required to sort the tiles 31 on the basis of their visible surface characteristics, and therefore an IR filter 36 is provided to optimize the video camera sensitivity in the visible region of the electromagnetic spectrum. Another advantage of using the IR filter 36 is that hot tiles which have come directly from a kiln do not affect the captured image of the tile surface.

The zoom, focus, gain and aperture facilities of the video camera 14 have to be calibrated from time to time and for this purpose a number of fixed calibration objects 37 are provided at the position A just below the conveyor belt 30. The calibration procedure is described in detail hereinafter.

In this embodiment, the ceramic tile 31 is imaged under carefully controlled lighting conditions where no external light is allowed to illuminate the tile 31. A controlled lighting system is provided by two sets of identical lighting structures positioned within the chamber 13. For convenience only a single lighting structure will be described hereinafter. The lighting structure comprises a row of quartz halogen bulbs 38 which are driven from a constant direct current (DC) 12 Volt source (not shown). It is preferred not to use conventional alternating current (AC) lighting as its 50 Hertz operation is not fast enough to guarantee that each tile will be subject to the same degree of illumination during the period when the video camera 14 captures an image.

The row of halogen bulbs 38 generate a significant amount of heat within the lighting structure. An air cooling system (not shown) is provided by provision for example of an input fan which forces air into the structure and generates an air stream across the row of bulbs 38 in order to prevent the lighting structure from overheating.

The light from the lamps 38 is directed towards a two-stage diffusion structure 39 which is designed to ensure to the extent possible that the tiles 31 are uniformly illuminated with diffuse light. The diffusion structure 39 comprises a coarse prismatic plastics diffuser 40, a mirror 41 and a fine opalescent plastics diffuser 42 which are sealed together to define an internal diffusion space 43. The lamps 38 direct light towards the coarse prismatic diffuser 40 which scatters light into the diffusion space 43. The scattered light passes through the fine diffuser 42, after first being reflected from the mirror 41, and illuminates the image capture field 13.

To improve the illumination of the tile 31, the two stage diffusion structures 39 are positioned at an optimal distance and angle to the tile 31 in order to provide a specularly exclusive and even illumination of the field of view. This geometry producing specularly exclusive illumination is particularly important for reflective surfaces. Secondary light reflections within the chamber 13 are also prevented by providing it with non-reflective light absorbing internal walls 44.

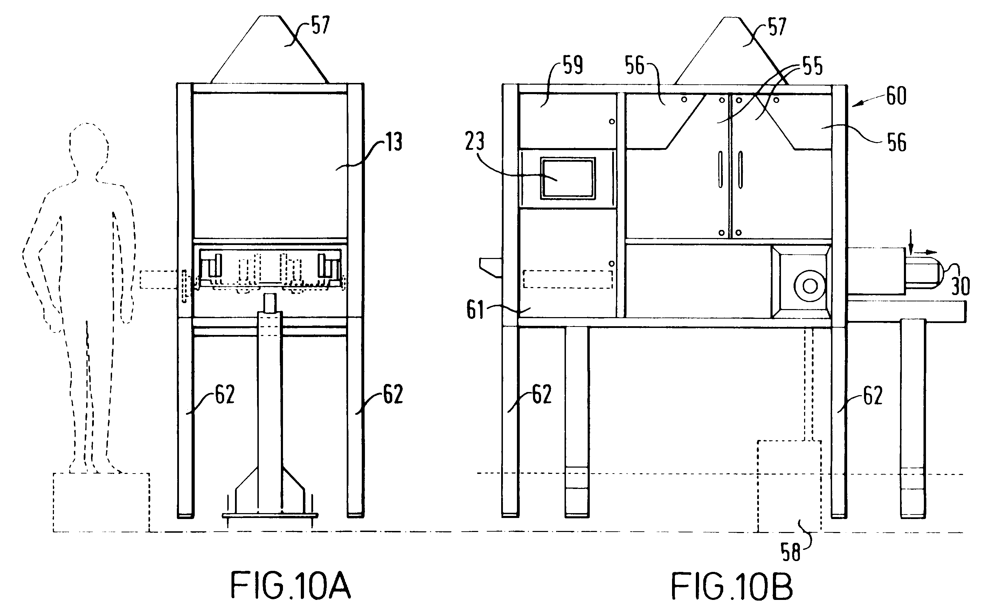

The inspection apparatus 11 is designed to be integrated into a tile production line and to function reliably within typical industrial tile-manufacturing environments. To overcome the potential problem of dust entering the chamber 13, whether carried on the tiles 31 or in the air, the chamber 13 is provided with an air cleaning system 58 (see Figure 10) which respectively supplies clean air to and extracts dust and unclean air from the chamber 13. The clean air system 58 can be arranged to suck or blow dust off the surfaces of the tiles 31 and/or can have mechanical cleaning means to clean the tile 31 as it enters the chamber 13. In addition, the clean air system 58 prevents the calibration tiles 37 from becoming dirty and hence accurate recalibration can always be carried out when required.

The embedded microcontroller 17 (shown in Figure 1 but not in Figure 2) is dedicated to the functional control of image capture within the chamber 13 and monitors and controls all other necessary parameters of the inspection apparatus to ensure correct operation. Specifically, the microcontroller 17 monitors the input sensor 32 and the shaft encoder 33 to determine the position of the tile 31 as it passes through the chamber 13. When the tile 31 reaches the position A, the microcontroller 17 sends an electronic control pulse to the video camera 14 to capture an image. The length of the pulse determines the exposure time of the camera 14.

The microcontroller 17 monitors and also controls the variable parameters of the video camera 14 such as its focus, zoom and aperture. Potentiometer position sensors (not shown) are provided in the video camera 14 and are connected to the microcontroller 17 which determine the settings of the focus, zoom and aperture. Position sensor outputs are used for feedback control when setting the camera lens focus, zoom and aperture.

The microcontroller 17 is also connected to temperature sensors (not shown) which are located at various places in inspection apparatus 11. Signals from these temperature sensors enable the microcontroller 17 to monitor, control and compensate for temperature dependent variations in the operation of the inspection apparatus 11. This is particularly important for the analogue electronics used in the inspection apparatus 11 as their performance may drift significantly with changes in temperature. The fans and the parameters of the lighting system 38 are also monitored, and hence the microcontroller 17 can determine when a fan or the lighting system is not functioning correctly and needs corrective action. In addition, the enclosure which houses the inspection apparatus (see Figure 10) has several doors for accessing the lighting, electronics etc. of the inspection apparatus. Sensors (not shown) are provided on the doors 55 to the chamber 13 and the microcontroller 17 is arranged to monitor these sensors to ensure that the doors are closed during operation of the apparatus so that the image capturing process is not affected by unwanted light entering the chamber 13.

A set of multicoloured indicator lights 45, which are connected to and controlled by the microcontroller 17, is provided on the housing of the inspection apparatus 11 to indicate to an operator the status of the inspection apparatus 11 during its operation. This set of indicator lights 45 allows an operator responsible for overseeing the operation of a large number of inspection apparatuses to notice easily when a fault has occurred in a particular inspection apparatus 11, such as a blown light bulb for example.

The automatic operation of the inspection apparatus 11 is dependent upon it first being "trained" to learn the surface characteristics of the tiles in order to make the necessary judgements during automatic inspection. In the "training" procedure the system learns which features to look for in order to effect classification of the tiles. The "training" of the system is effected by passing through the apparatus a sample number of tiles of all categories that the apparatus may be required to recognize. The system processes these sample tiles using a large number of feature determining algorithms and statistical analysis routines from which a limited number of algorithms and routines are then selected. These algorithms and routines are selected on the basis of (a) optimum discrimination between required number of tile grades and (b) computational cost. The selected algorithms and statistical analysis routines are used in the runtime period (real-time classification period) of the apparatus. The length of the training period will vary according to several factors including the number of classes of tiles to be sorted, the number of examples of each class used and the ease with which different classes of tile can be distinguished.

In the runtime period, an image of a tile surface is processed in real time as the tile 31 passes through the inspection apparatus 11. After the image of the tile surface is captured, the selected algorithms and routines create a list of feature values which describe the required characteristics of the tile surface. This list is then used to classify the tile 31 and to generate the appropriate instruction for the tile 31 to be physically sorted.

The microcomputer 21 stores a large number of feature extraction algorithms and statistical analysis routines, which are used to determine the degree to which a tile surface contains one or more particular features. The database 22 stores an index of the algorithms and routines which are to be used for each tile type. Examples of features which are examined are overall grey scale, contrast variations and texture, in terms of "texton" density and distribution. In the training period, relevant algorithms and routines for a specific tile type are run on each image of the sample tiles forming the various classes and a set of numbers (index) for each tile type which defines a subset of all the algorithms and routines used to classify tiles is determined. This subset is determined in the training period. The algorithms and routines chosen for use in the runtime period are selected on several criteria, for example the speed at which they produce results and the degree to which these results differentiate between the various classes of tiles. The hardware in the image processor is configured to most efficiently execute the selected algorithms for real-time classification. The range of feature values that define a particular class/category is used to configure the classifier program, also resident in the image processor 18. During inspection, the generated feature values of the unknown tiles are analysed in order for the category to which a particular tile 31 belongs to be deduced.

When an image of a tile is captured during the runtime period, it is processed by the selected algorithms and routines resident in the hardware of the image processing unit 18. The resultant list of feature values is used by the classifier program to derive a classification code for the tile 31. The classification is communicated to the microcontroller 17 which generates the appropriate sort code and sends this to the sorter unit 12 at a time when the tile 31 has reached the sorter unit 12. This time is determined by the microcontroller 17 monitoring the sorter sensor 19 and the shaft encoder 33.

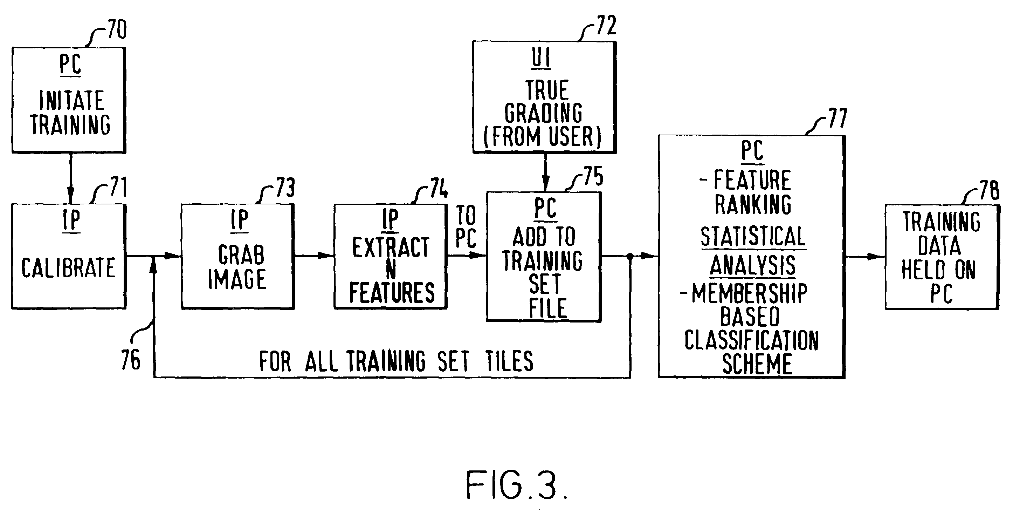

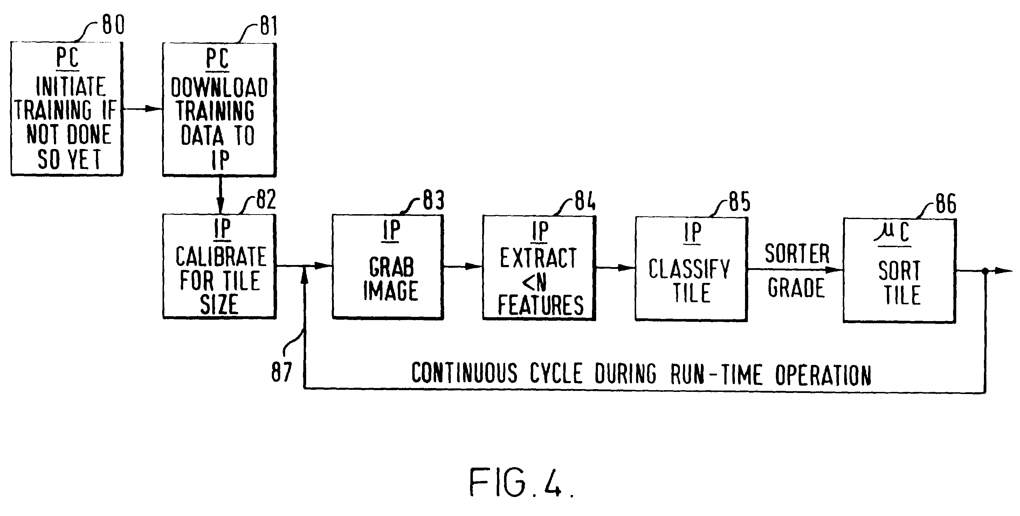

The software program which is responsible for performing the core function of the above-described automatic inspection apparatus is called the classifier program. This program is implemented in software on the microcomputer 21 for data acquisition and processing during the training period, and in software-configurable hardware on the image processor 17 for data acquisition and processing during the runtime period. The operation of the classifier in the training period is shown in the flow diagram of Figure 3, and its operation in the runtime period is shown in the flow diagram of Figure 4. It should be noted that both of Figures 3 and 4 include an abbreviated reference in each processing box to the hardware at which the corresponding processing takes place. The abbreviation PC stands for the microcomputer 21, IP for the image processing unit 18, UI for the user interface 23 and µC for the microcontroller 17.

Referring to Figure 3, the training period is initiated at 70 at the microcomputer 21 via the user interface 23. The program then sends instructions to the image processing unit 18 and the microcontroller 17 to calibrate at 71 the zoom, focus and aperture of the camera 14. The details of how the camera lens is calibrated will not be described at present but are set out elsewhere in this description.

The next processing step involves the use of a set of sample tiles representative of the different gradings within a specified tile type to be sorted. These tiles are pre-graded by appropriately skilled personnel and knowledge of their grading is necessary for training the system. During the training period, a sample tile is fed into the inspection apparatus 11 and the corresponding tile grade or class for this tile is entered at 72 into the microcomputer 21 via the user interface 23. An image of the sample tile surface is captured at 73 and then a process begins of extracting as much information out of the image as possible and correlating the extracted image data with the corresponding known grade of the sample tile.

Data is extracted at 74 from the captured image of the sample tile surface by a large number of feature extraction algorithms, and is analysed by a plurality of statistical analysis routines in order to assess the degree to which the image of the sample tile surface contains particular features. Each algorithm together with its statistical analysis routines are downloaded to the image processing 18 and run on the digitised captured image of the sample tile surface. The result of each statistical routine of each algorithm is given as a feature value and once all the relevant algorithms and their statistical analysis routines have been run, a list of feature values which represents all of the useful data pertaining to the sample tile obtained. This list is subsequently transmitted to the microcomputer 21 and added at 75 to a data file called the training set file. The particular class of sample tile to which this data corresponds, which has been entered earlier at 72, is also added at 75 to the training set file.

The process of extracting and storing information at 73, 74 and 75 about the surface of a sample tile is then repeated at 76 for each of the sample tiles remaining in the sample tile set. In addition, the predetermined grading of each sample tile is also entered at 72 via the user interface 23 and added at 75 to the training set file. High precision in the runtime classification of tiles can be obtained by having a large number of sample tiles which are well distributed within each of their grades. In particular, if within a single grade, there are some examples of tiles which are at borderlines between grades, the classification process should perform optimally.

Once all of the sample tiles have been processed as above, the results are analysed at 77 in order to determine the subset of feature extracting algorithms and their corresponding statistical routines which are to be used in the runtime period and to determine how the results of those algorithms and routines are to be interpreted.

As the classification process is run in a continuous cycle, there is only a limited period of time in which to capture a tile image, process that image and determine the grading of the tile before another tile is due to be graded. This time constraint means that the subset of all the feature extraction algorithms and their statistical analysis routines are selected on the basis of several criteria including those which can be implemented in the shortest possible time and that can best distinguish tiles of one grade from those of other grades. In addition, the method employed to interpret the results of the selected algorithms and their statistical analysis routines in deriving the grade of the tile, must also be fast enough to be carried out within the time available. Therefore, in considering which algorithms and statistical analysis routines to select and how the results are to be processed, discrimination abilities together with computational cost (computational power X time) both have to be considered.

Determination of which algorithms and statistical analysis routines are best at separating the tiles into their correct gradings is carried out by the feature ranking algorithm which analyses the lists of feature values and the known gradings of the sample tiles. There are many different techniques available for determining where the boundaries lie in deciding the grade of a tile, such as for example the "n-means clustering" algorithm, the "k-nearest neighbours" algorithm and linear discriminant analysis. However, for this embodiment of the present invention, a membership based classification scheme (analogous to fuzzy logic) is considered to be the most suitable.

The membership based classification scheme involves determining overlapping gaussian or triangular membership distributions for each class of tile rather than the "brick wall" boundary distributions that are used with other classification algorithms. The major advantage of this method of classification is that at the boundaries between grades, the classification is carried out by analysis of the probabilities of the tile belonging to each grade. Thus, when complex boundary conditions exist as is the case with n-dimensional space (n≥3), the membership based classification scheme is far better at determining to which grade the tile belongs.

When determining which combination of algorithms and statistical routines will produce the best results in the time period available, the time each algorithm and its associated statistical analysis routines take to produce a result has to be known for each tile type. This information is predetermined and stored in the database 22 of the microcomputer 21. Some statistical analysis routines carried out on one algorithm may be equivalent to parts of other routines and, in addition, several algorithms may be very similar in the features that they extract. In order to remove some of this redundancy and get improved results, the feature ranking algorithm utilises the results of some routines to determine the results of others, and also tries to select algorithms and routines which extract different types of features.

Once the results have been analysed at 77 and the algorithms and routines chosen, all of this information is stored at 78 in the database 22 of the microcomputer 21 for later downloading to configure the image processing unit 18 prior to the runtime operation.

Figure 4 of the accompanying drawing shows the processing stages involved in the operation of the classifier program during the runtime period. The program is initiated at 80 by the user via the user interface 23, and subsequently identification information defining the type of tile to be sorted is entered into the microcomputer 21. The program then checks at 80 to see whether or not the system has been trained for this particular type of tile and if not, training is initiated as shown in Figure 3. On completion of this training or the recognition that the system has been trained for the respective type of tile, the corresponding training data is downloaded at 81 to the image processor 18.

The downloaded training data is stored within a central store (not shown) in the image processing unit 18. The image processing unit 18 is designed to execute the algorithms and the statistical analysis routines efficiently by incorporating distributed hardware processing points which are software configurable. At this stage, the hardware processing points are configured to implement one or more of the algorithms/routines.

Once the image processing unit 18 has been configured at 82 the program instructs the image processing unit 18 and the microcomputer 17 to calibrate the zoom, focus and aperture of the camera 14, and this is described in detail hereinafter.

The image processing unit 18 is then ready for on-line classification of tiles corresponding to the previously identified tile type. Classification commences with the image processor 18 capturing at 83 an image of the decorative surface of an unclassified tile which is passed under the camera 14. As mentioned previously, the camera 14 generates an analogue output signal which is amplified, off-set adjusted and filtered (by an anti-aliasing filter) prior to being digitized by the analogue to digital converter. This digital information is then corrected for known abnormalities e.g. shading correction (discussed later) and is sent to a digital frame store (not shown) where a digital representation of the captured image is stored for further image processing.

The next stage is to extract at 84 previously selected features from the stored representation of the image. The image processing unit 18 executes the algorithms/routines which have previously been configured into the hardware processing points, stores the resultant feature values and then reconfigures the hardware for the next algorithms/routines to be implemented. This procedure is repeated until all the downloaded algorithms/routines have been carried out on the captured image, and a complete feature list has been compiled.

The thus derived feature list is then used at 85 to classify the tile into one of the tile grades. If the feature list does not place the tile into a known grading, the tile is placed in a reject category. A preferred feature of the classifier program is to analyse the reject category and determine, on the basis of past results, if a new grading category is emerging from some of the rejected tiles. This feature is particularly useful if the classifier has been trained on a set of training tiles which does not represent all of the grades available for classification.

On determining at 85 the grade of the tile, the image processor transmits the grading to the microcontroller 17 which in turn generates at 86 a sorter code for the line sorter circuit 12. The entire procedure of steps 83,84,85 and 86 is repeated at 87 for each tile passed through the inspection apparatus 11 until all the tiles have been classified.

The line sorter unit 12 has respective boxes for tiles belonging to each of the known grades and a box for rejected tiles. If a new grade is determined from the reject category, then in order to separate out these tiles, the line sorter unit 12 is set up to accept the new category and all of the previous reject tiles are put through the inspection apparatus again.

The inspection apparatus 11 has to be calibrated for correct operation and this is carried out in a two stage process. In a primary stage, calibration of the video camera variables such as zoom, aperture, gain and focus is carried out as well as optimisation of the gain and offset of the digitiser and in a secondary stage, subtle changes in lighting and in the response of the sensing elements of the video camera 14 can be compensated.

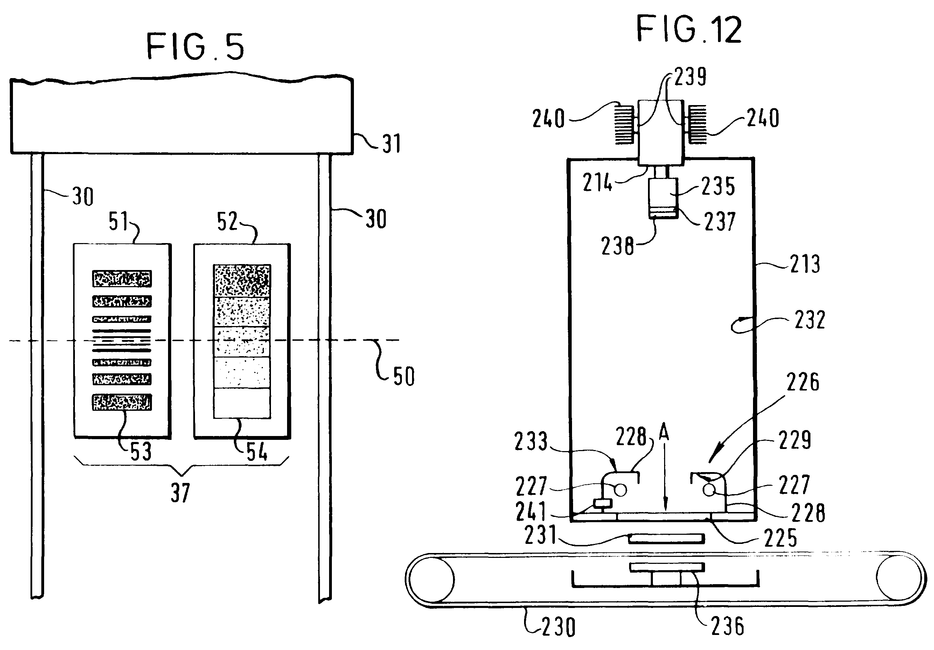

Referring to Figure 5, two calibration objects 37 are provided for use in the primary calibration stage. The calibration objects 37 are located orthogonally and centrally in the field of view 50 of the video camera 14, and comprise a zoom/focus object 51 and a grey-scale object 52. The zoom/focus object 51 comprises a lined pattern (bar target) 53 which is used for automatic in-process calibration of the zoom and focus of the video camera 14. The grey-scale object 52 comprises an n-segment grey scale (where n = 5 for example) for automatic in-process calibration of the aperture and gain settings of the video camera 14 and of the gain and offset settings of the digitiser.

In the secondary calibration stage, also referred to as shading correction, an unpatterned reference tile of uniform colour is placed at position A and an image of the reference tile is obtained. The image is an average of multiple images taken of the reference tile in order to minimize noise. Variations in the uniformity of the image which may be caused by non-uniform lighting or variations in the output of different camera pixels can then be detected. A correction factor is then calculated so that all picture images can be software corrected for uniformity before being processed by the feature algorithms. This correction is carried out just after the image data has been digitized.

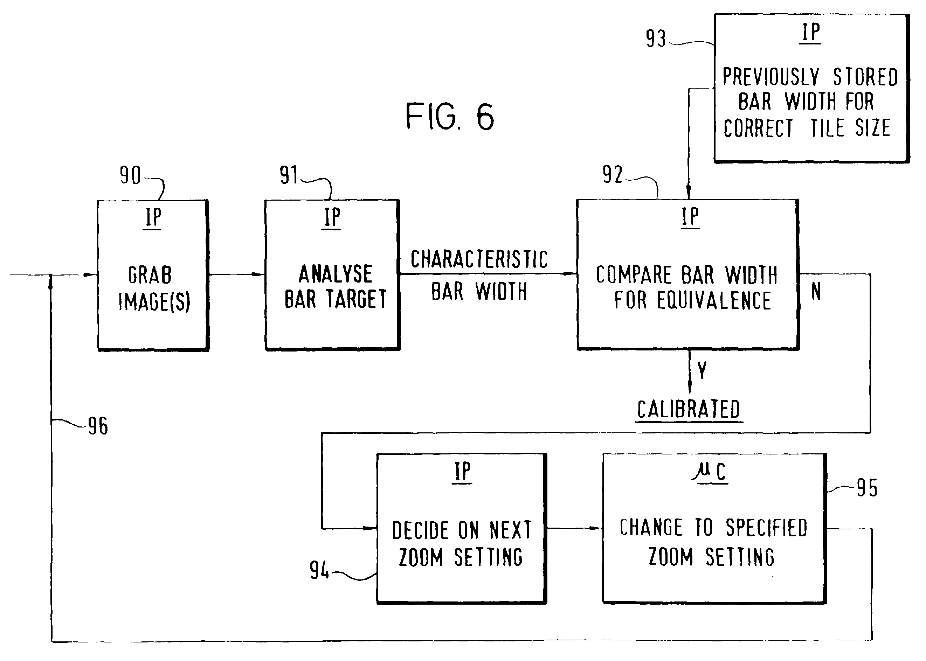

Figure 6 shows the processing stages involved in the calibration of the zoom lens 35 of the camera 14. The procedure commences with an image of the calibration objects 37 being obtained 91. As with the shading correction, multiple images may be captured of the calibration objects 37 and averaged to reduce the effects of noise. The part of the captured image that corresponds to the zoom/focus object or bar target 51 is then analysed to determine the characteristic widths of each of the bars in its lined pattern. These characteristic bar widths are compared at 92 with those which have been previously stored at 93 as representative of the correct zoom lens setting for the size of the tiles 31 currently being classified, the correct zoom lens setting typically having been determined during the training period for the type of tiles 31 currently being classified. If the difference between the characteristic widths and the previously stored widths is within predetermined tolerance limits, the zoom lens 35 is not adjusted. However, if the difference is outside of these limits, then a new setting of the zoom lens 35 is calculated 94 in order to reduce the difference and the new setting is communicated to the microcontroller 17 which, in turn, actuates the correct motors to change at 95 the zoom lens setting by the required amount. The entire procedure is repeated at 96 until the difference between the characteristic bar widths and the previously stored bar widths falls within the predetermined tolerance limits.

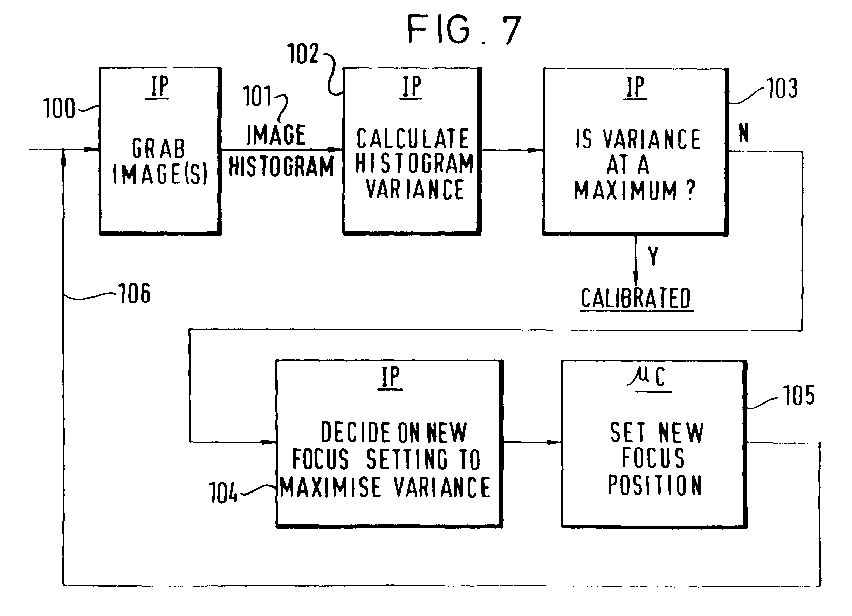

Figure 7 shows the various processing stages that are carried out in the calibration of the focus of the camera 14. The calibration commences at 100 with an image of the calibration objects 37 being obtained by capturing multiple images of the calibration objects 37 and averaging them, and the bar target of the zoom/focus object 51 being analysed. An image histogram is derived at 101 of the various bar widths measured from the captured image and then the variance of the histogram is calculated at 102. Ideally, if the image is focused the variance of the bar widths will be at a maximum and so the calibrated variance is tested at 103 to determine whether it has reached a maximum value. If the variance has not reached its maximum, a new focus setting of the camera 14 is derived at 104 in an attempt to increase the variance further. The new focus setting is communicated to the microcontroller 17 and the focus of the camera lens is changed accordingly at 105 to the desired setting. The above procedure is repeated at 106 until the variance has reached a maximum at which point the focus calibration is deemed to be completed.

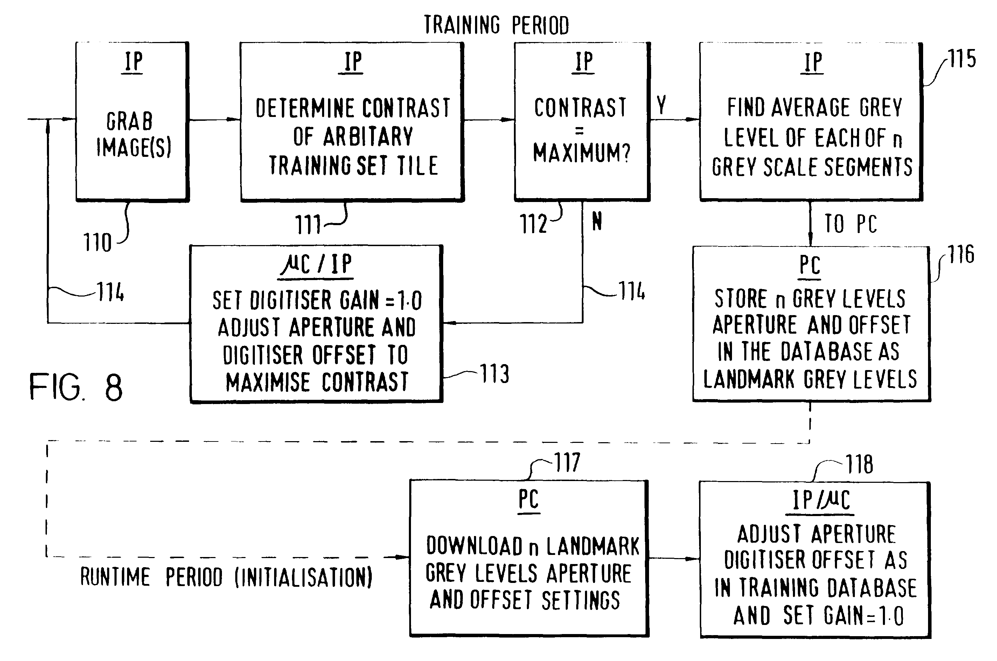

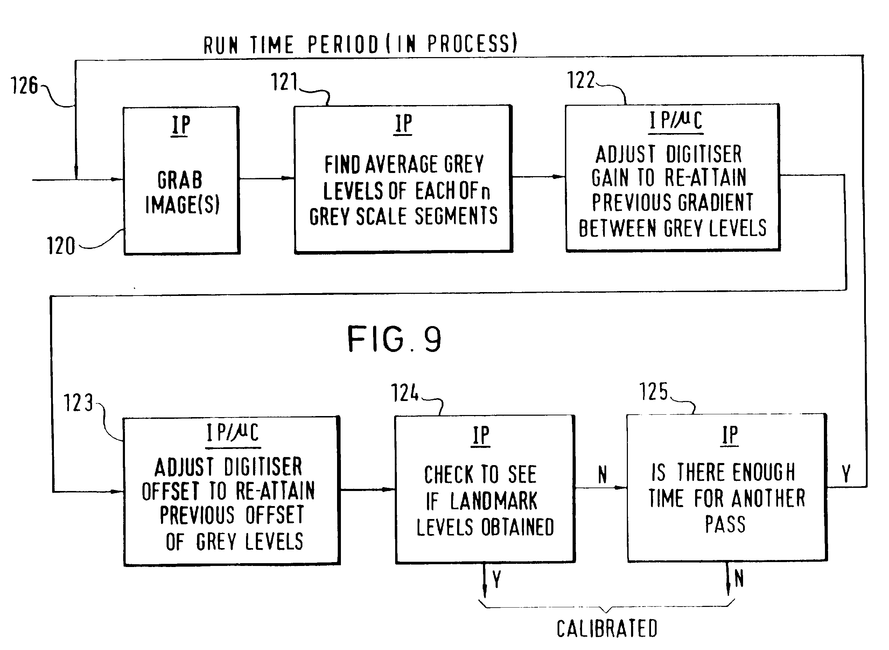

The calibration procedure for the camera aperture and the digitiser gain and offset is shown in Figures 8 and 9 of the accompanying drawings. Figure 8 shows the first part of the procedure which takes place in the training period and in the initialisation of the runtime period, and Figure 9 shows the second part of the procedure in the runtime period during the tile classification process.

Referring to Figure 8, the calibration procedure is initiated during the training period by the image processing unit 18 obtaining at 110 an averaged image of multiple captured images of an arbitrary sample tile. The contrast of the sample tile is determined at 111 and checked at 112 to establish whether it is the maximum contrast available. If the maximum contrast has not been reached, the digitiser gain is set to unity at 113 and the camera aperture and digitiser offset are adjusted at 113 in order to determine settings to maximise the contrast. The procedure is repeated at 114 until the settings of camera aperture and digitiser gain produce the maximum contrast from the selected sample tile. At these settings the average grey level of each of the n grey-scale segments (landmark grey-levels) is determined at 115 and this data, together with the aperture and offset setting data, is sent to the microcomputer 21. The conditions under which the inspection apparatus 11 is trained for each tile type varies and so it is important to store at 116 the transmitted data in the tile database 22. This enables the exact conditions under which the training was effected to be recreated during the runtime period for each particular tile type.

At the beginning of the runtime period, the image processing unit 18 is initialised with data from the microcomputer 21 (see Figure 4, step 81). In particular, data relating to the landmark grey levels, the aperture setting and the digitiser offset setting are downloaded at 117 (Figure 8) for the type of tile to be classified. The camera aperture is then set at 118 by the microcontroller 17 and the digitiser gain (set to 1.0) and the digitiser offset are configured at 118 by the image processing unit 18.

Referring now to Figure 9 of the accompanying drawings, the "in process" image calibration by adjustment of the digitiser gain and offset during the runtime period, is shown. This is an active calibration which is carried out at every opportunity in order to maintain very accurate compensation for any difference in current conditions from those that existed during the training period for the particular tile type. In contrast, the aperture, zoom and focus calibration can be considered to be passive calibrations as these calibrations are generally only carried out during initialisation of the runtime period.

The "in process" image calibration commences with an averaged image of the n-segment grey-scale object 52 being obtained at 120. The image is analysed and the average grey level of each of the n segments is then determined at 121. The measured grey levels are plotted against the landmark grey levels and the gradient and offset of the best fitting line through all the points is determined. This gradient and offset are respectively directly comparable to the digitiser gain and offset and thus, the change in digitiser gain and offset required to compensate for luminosity/digitiser characteristic changes between the training period and runtime period, can be easily calculated. The digitiser gain is then accordingly adjusted at 122 to compensate for these differences. Similarly, the digitiser offset is also adjusted at 123 for compensation.

The next stage is to check at 124 whether the measured grey-levels are equivalent (within tolerance limits) to the landmark grey levels. If they are equivalent, the previously calculated adjustments will be negligible and the aperture calibration is completed. However, if they are not equivalent, the previously calculated adjustments will provide a better approximation to the required digitiser gain and offset settings than before.

There are severe time constraints on the "in process" calibration since it has to be carried out within the short time period between completing classification of one tile and starting classification of the next. In this regard, if the landmark grey levels have not been obtained at 124, the image processor 18 determines at 125 whether there is enough time to repeat at 126 the entire "in process" procedure. If there is enough time, the procedure is repeated at 126, but otherwise the newly derived digitiser gain and offset settings are used in the subsequent classification process.

Figures 10A and 10B show an exemplary housing enclosure 60 for the inspection apparatus 11 previously described. The chamber 13 is accessed by two main doors 55 and the lighting structures by two subsidiary doors 56. The camera housing 57 and the clean air system 58 are respectively situated above and below the image capture chamber 13. Integrated into the enclosure 60 is a small compartment 59 for the microcontroller 17 and a large compartment 61 for the image processing unit 18 and the PC 21 and its peripherals such as keyboard, printer etc. The housing enclosure 60 is mounted on legs 62 and raised to such a height that the conveyor belt 30 can accept and pass tile 31 on to other processing equipment.

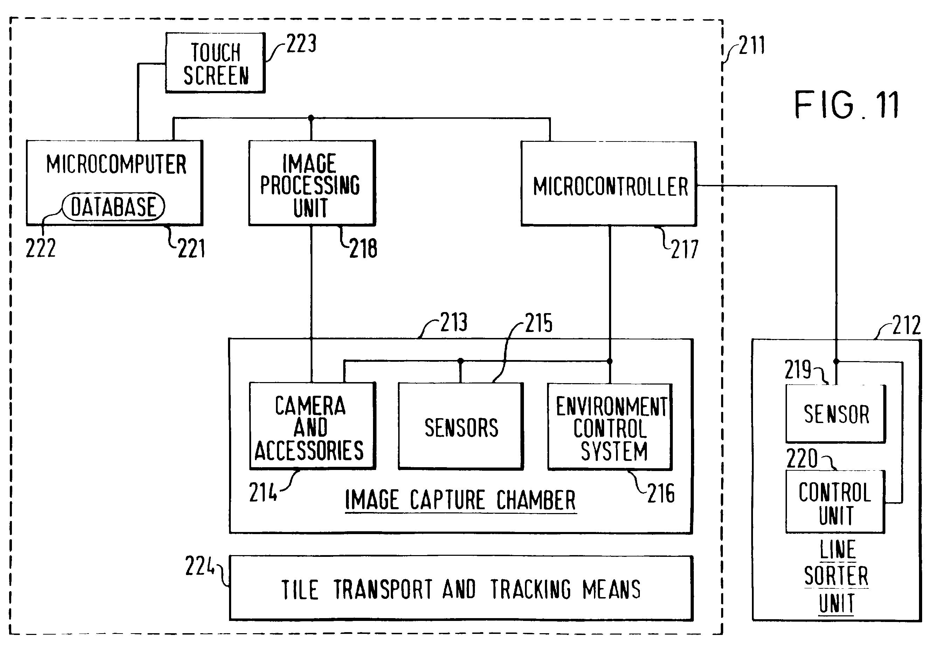

Figure 11 schematically shows an automated inspection apparatus 211 according to a second embodiment of the present invention. The automated inspection apparatus 211 comprises an image capture chamber 213 that houses a camera 214, sensors 215 and an environment control system 216 which are controlled by processing means. The processing means comprise a microcontroller 217, an image processing unit 218 and microcomputer 221 having an associated database 222 and a touch screen 223. The microcontroller 217 is connected to a sensor 219 and control unit 220 of a line sorter unit 212 for directing and stacking different classes of tile. In all of these above aspects, the inspection apparatus 211 is very similar to the automated inspection apparatus 11 of the first embodiment (cf Figure 1) and therefore, the following description is only directed towards the differences between the two inspection apparatuses.

The major difference resides in the apparatus involved and the methods used in the image capturing process. In particular, tiles are not conveyed into the image capture chamber 213 but rather they are passed under an image capture window 225 of the chamber 213 and the image of the tile is taken through the window. This enables the image capture chamber 213 to be reduced in size and complexity and also to be completely sealed thereby increasing its protection against harsh industrial environments. In addition, the video camera 214 does not capture just one image of a tile but rather it takes a great number of line scan images as the tile is moved beneath it. These line scans are then combined in a frame store of the image processing unit 218 to provide a digital representation of the tile surface. High-accuracy tracking means 224 are associated with the conveyor 230 and generate signals for triggering the camera 214 a plurality of times as a tile passes under the window 225. As only line scan images of tiles are taken, the lighting structure 226 within the image capture chamber 213 can be greatly simplified.

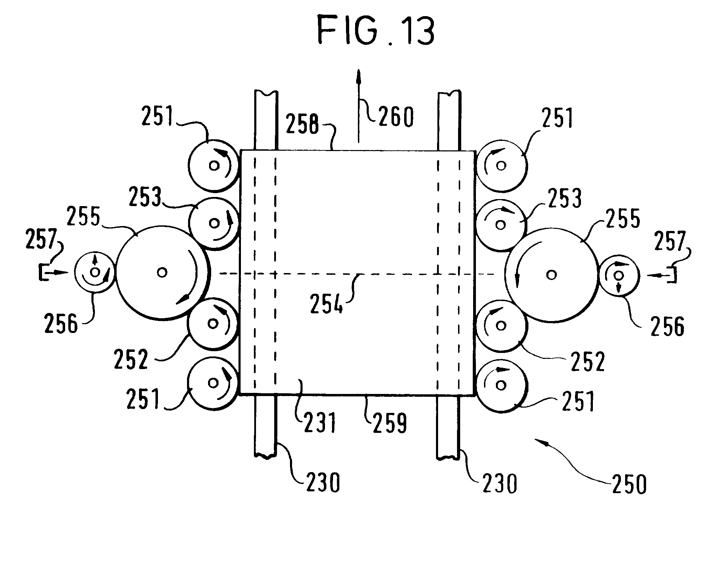

Referring now to Figure 12 of the accompanying drawings, the image capture chamber 213 comprises a sealed chamber incorporating the abovementioned image capture window 225 at position A. The window 225 is made from a glass having a low refractive index, low reflection properties and good light spectrum transmission properties. A simple lighting structure 226 is provided adjacent the image capture window 225 for illuminating the ceramic tile 231 as it passes under the image capture chamber 213.

The lighting structure 226 comprises a pair of AC fluorescent tube lights 227 which operate at high frequencies, typically in the region of 20-40 KHz, and a pair of reflector structures 228 which reflect light towards the image capture window 225. The tube lights 227 operate at a high enough frequency to guarantee that each tile is subject to the same degree of illumination during the period that the video camera 214 captures an image. In addition, they generate much less heat than DC lighting, which is also advantageous. The pair of reflector structures 228 have internal mirrored surfaces 229 for reflecting most of the light from the tube lights 227 towards the tile 231, and are arranged to define a gap through which the camera 214 can capture a line scan image of the tile 231. The geometry of the arrangement and the positioning of the tube lights 227 is such that specularly exclusive and even illumination of the field of view is provided. This substantially prevents direct reflection from the tile 231 and additionally, secondary reflections are also prevented by providing non-reflecting light-absorbent coating on the internal walls 232 of the chamber 213 and on the external surface 233 of the reflector structures 228.

The video camera 214 is located in the upper part of the chamber 213 and has a lens 235 which is first focused on an initial tile 231 and thereafter remains fixed for subsequent tile sorting. Varying the focus for each tile is not required as there is no variable zoom and as the depth of field of the lens 235 is large enough to provide focused images both of the tile 231 and of a calibration object 236 which is located just below the tile imaging position at A. The lens 235 does not require a variable zoom as the camera's field of view is fixed. By removing the need for variable zoom and focus, calibration procedures are simplified and there is no requirement for a zoom/lens calibration object 51, as was required in the previous embodiment.

The camera lens 235 is provided with an IR filter 236 to optimise the video camera sensitivity in the visible region of the electromagnetic spectrum. A liquid crystal shutter device 238 is also provided and is attached to the camera lens 235. This device is used to prevent over-exposure of the camera 214 to the tile image which may be caused by jitter (varying belt speed) of the conveyor belt 230 and is described in more detail hereinafter.

The functioning of the video camera 214 and of the digitiser (not shown) is highly dependent upon temperature and in order to regulate their operating temperatures, an air conditioning system (not shown) is provided. The digitiser is positioned close to the analogue camera output and within the camera housing in order to minimise drift effects, and chilled air is circulated in a closed loop around the camera housing. To enhance the accuracy of the temperature regulator miniature heat pumps 239, attached to large heat sinks 240, are provided on the camera housing. Ideal temperature control would be achieved by having heat pumps 239 on all of the camera's analogue temperature sensitive circuitry, for example, on the CCD itself. In particular, the CCD will perform at its best when it is kept as cool as possible. However, as positioning heat pumps on the circuitry is mechanically difficult and is prohibitively expensive, this is not a practical proposition with present technology and therefore the heat pumps are provided only on the camera housing.

The air conditioning closed loop extends to the computing environments, i.e. the microcontroller 217, image processing unit 218 and the microcomputer 221, in order also to regulate their respective operating temperatures. The advantage of using an air conditioning system is that no filters are required and so maintenance of the apparatus 211, especially in dusty industrial environments, can be reduced.

The microcontroller 217 monitors the temperature of the camera housing via a temperature sensor (not shown) and controls the operation of the heat pump 239 and the air conditioning system accordingly. The microcontroller 217 is also responsible for monitoring conditions within the image capture chamber 213 and is provided with a light sensor 241 which provides an accurate measure of changes in luminosity of the tube lights 227 due to ageing, as well as detecting when the tube lights 227 are not functioning correctly.

The video camera 214 images the tile 231 on a line-by-line basis and therefore many types of line-scan video camera could possibly be used. In this particular embodiment, a Time Domain Integration (TDI) camera 214 (incorporating a CCD array) is used. The TDI camera 214 captures an image of the full width of the tile 231 and of x lines along its length, where x = 96 for example. Each time the tile 231 moves along by a distance corresponding to one line of pixels in the CCD array, the camera 214 is triggered to capture a further image of the tile 231 in its new position and thus a particular line across a tile is imaged x times. The plurality of images of the particular line can then be averaged to provide a very accurate image of the line.

An advantage of using a TDI camera 214 is that lower lighting levels can be used since capturing a plurality of images of the same line effectively increases the exposure time to that line. In addition, problems associated with non-uniform response of the camera's CCD pixel array can be averaged out as all the pixels in the CCD array are used. Furthermore, frame shift smear can also be avoided.

The advantages obtained by using the TDI camera are particularly dependent upon the accurate tracking of the tile 231 as it passes through the imaging position A. A tile position tracking device 250 (shown in Figure 13) is provided for generating the triggering signals for the camera 214. The position tracking device 250 comprises two identical wheeled structures which are mounted on respective sides of the conveyor 230. Each wheeled structure comprises a row of jockey wheels 251, 252, 253, a gear wheel 255 and a position encoding wheel 256. The jockey wheels 251 at the ends of each row are free spinning wheels which are not connected to adjacent jockey wheels. These free spinning wheels 251 serve to guide tiles 231 into the tracking device 250 thereby correcting any minor misalignment of the tile 231 that may be present. The tracking wheels 252, 253 of each row are positioned symmetrically about a dividing line 254. Although not shown in the drawings, the dividing line 254 corresponds to the tile imaging position A in Figure 12. The tracking wheels 252 and 253 are operatively coupled by means of the gear wheel 255, which in turn is coupled to the position encoding wheel 256. The position encoding wheel 256 has a much smaller radius than that of the gear wheel 255 and thus any rotation of the tracking wheels 252,253 is amplified by the gearing ratio of the gear wheel 255 to the position encoding wheel 256. A shaft encoder 257 is provided with each position encoding wheel 256 in order to measure the rotation of the position encoding wheel 256 and thereby to provide a high-resolution position determining signal for triggering the camera 214.

Each of the wheeled structures is held in a frame (not shown) that is mounted to the support structure (not shown) of the conveyor 230. Each frame incorporates a spring-arrangement for urging the wheeled structures towards each other. The spring arrangement provides a weak spring force that is strong enough to ensure good contact between the tile 231 and the jockey wheels 251, 252, 253 and which improves the accuracy of the position tracking device 250.

When a tile 231 enters the position tracking device 250, the tile 231 is first aligned by the free-spinning wheels 251. The leading edge 258 of the tile 231 subsequently contacts the tracking wheel 252 whose rotation activates the generation of the position determining signals. Another feature of the tracking arrangement is that the tracking wheel 253 rotates with tracking wheel 252, even though the tile 231 has not yet reached its position. Thus, when the leading edge 258 of the tile 231 reaches the tracking wheel 253, it is smoothly guided through the device 250. Furthermore, this feature also enables the position determining signals to be generated before the leading edge of the tile has reached the tile imaging position A and after its trailing edge 251 has left this position, thereby allowing a complete image of the tile surface to be captured. Figure 13 also shows the respective directions of rotation of each of the wheels when the tile 231 is passing through the device 250 in the direction of the arrow 260.

The shaft encoder 257 and the gearing ratio between the gear wheel 255 and the position encoding wheel, are chosen in order to provide triggering signals for the camera each time the tile is moved along by a distance corresponding to one line of pixels in the camera. The camera triggering is thus dependent on the speed of the conveyor 230 and ideally, if this is constant, the exposure time of the camera is also constant. However, in practice the speed of the conveyor 230 tends to "jitter" and therefore compensation has to be provided to prevent varying exposure times. Compensation is provided by the liquid crystal shutter device 238 shown in Figure 12. This device 238 can operate at high speeds/frequencies to simply regulate the exposure time of the camera 214 for each image capture. Alternatively, the exposure time could be varied by light strobing the tile as it moves through the image sensing position.

As mentioned previously, the image capture chamber 213 is sealed from the external environment for protection against dusty industrial environments. However, there is a tendency for dust to accumulate beneath the image capture chamber 213 even though, as in the previous embodiment, tiles 231 are cleaned prior to reaching the imaging position A. A calibration object cleaning arrangement (not shown) is therefore provided for keeping the calibration object 236 (see Figure 12) substantially free from dust. The cleaning arrangement comprises a row of air blowing orifices positioned along one edge of the calibration object 236 and, on an opposing edge of the calibration object, a row of respective air suction orifices are provided that face the corresponding air blowing orifices. Thus, a constant air stream can be maintained across the surface of the calibration object 236 thereby preventing dust from settling on this surface.

The software used in the second embodiment is substantially the same as that of the first embodiment. The most significant change is associated with providing more user control of the tile grading process. In this regard, the user interface has been adapted to give a high degree of information about the processing parameters, tile grade boundaries and other relevant data to a user via the interactive touch screen 223. The user is provided with a large number of processing options including "tuning" the grading process to adjust the tile grade boundaries, weighting the grading process by selecting a training tile as representative of the centre of a particular grade, and setting up process alarms which can monitor the performance of the grading procedure and notify the user when predetermined limits have been exceeded. Another feature presented to the user is the creation of new tile grades from existing data. This allows the use of a sample set of tiles for training which do not cover all grades, the additional grades being determined by creating new tile grade boundaries.

When the grading procedure is being "tuned" the user is presented with a graphical display of the selected features for grading, the results of the training or classification period and the system determined boundaries between the grades. The user is then able to move a selected boundary to a new position and to see graphically the effect this would have on the membership of the tiles to the various grades if that boundary position is selected. The user is able to adjust the performance of the system simply and quickly and also to see the effects this change would have on the grading results.

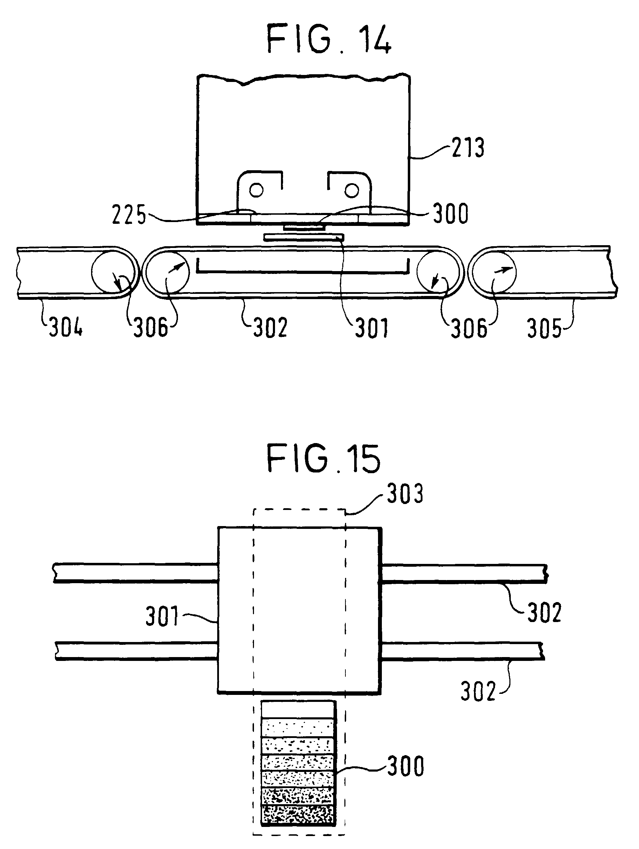

Referring now to Figures 14 and 15 a third embodiment of the present invention is shown. This embodiment is almost identical to that of the previously described second embodiment and so only the differences are discussed below.

In the third embodiment an "in-line" calibration procedure is used to provide fine adjustment of the sensed image data to compensate for temperature drift, variation in lighting conditions and jitter. The procedure involves an image of a calibration object 300 being present in every line scan of the camera. This is achieved by the camera line scan extending beyond the width of the tile 301 and the calibration object 300 being imaged in the extra width of the scan (see Figure 15). Thus, the calibration object 300 is positioned adjacent a high-precision conveyor belt 302 (discussed below) in the field of view 303 of the TDI camera. The calibration object 300 is adhered to the underside of the glass window 225 of the image capture chamber 213. This has the advantage that the calibration object cleaning arrangement of the second embodiment is not required as the surface of the object is sealed from dust. Alternatively, the object could be placed within the sealed chamber to achieve the same result.

In the previously described "in-process" calibration, the digitiser gain and offset are adjusted to compensate for changes between the runtime period and training period. However, as this procedure is not fast enough for "in-line" calibration, the runtime sensed grey levels are equalized to the landmark grey levels by passing the data through a fast digital look-up table (not shown). In order to facilitate accurate multiplication by fractions in the look-up table, 10-bit non-compensated intensity data is input to produce 8-bit compensated output data. Using the look-up table has the advantage of providing compensated intensity data quickly and also allows non-linear transfer functions to be implemented for the conversion.

Another advantage of using "in-line" calibration is that high-accuracy tracking means are not required. In this regard, it is not necessary to incorporate the tile position tracking device 250 (Figure 13) in the automated inspection apparatus. Rather, the camera is triggered independently by a high-frequency crystal oscillator (not shown) which gives a constant exposure time and a more accurate conveyor arrangement is used (Figure 14) which minimizes jitter keeping the tiles 301 moving at a substantially constant speed through the imaging area. Use of this conveyor arrangement removes the need for the LCD shutter or light strobing.

The new conveyor arrangement comprises three conveyors, an input conveyor 304, an output conveyor 305 and the high-precision conveyor 302 between the input and output conveyors. Each conveyor is driven by motors which are self-regulating and are set to move the conveyor belt at a constant predetermined speed. This speed is set to be higher than that of other parts of the tile manufacturing/processing system in order to ensure that a backlog of tiles does not accumulate at the tile sorter. In addition, all three conveyors are set to operate at the same speed.

The provision of the input and output conveyors 304, 305, serves to buffer the high-precision conveyor 302 from the loading that inevitably occurs due to tile acceleration and deceleration which occurs with tiles respectively entering and leaving the tile inspection apparatus from slower conveyor belts. Thus, the high-precision conveyor 302 is not loaded and maintains a constant speed. In addition, the high-precision conveyor 302 has a minimal length which inherently reduces its jitter. To keep track of tiles moving along the conveyors, each conveyor is provided with at least one shaft encoder 306.

To further improve the quality of the digitized tile image, the image intensities output from the digitizer are averaged to reduce the effects of noise. Image intensities from four adjacent pixels forming a 2 x 2 square array, are averaged to give a single image intensity value for a new larger pixel. Thus the spatial resolution is reduced by a factor of four, for example, a 2 x 2K array of pixels is reduced to a 1 x 1K array of pixels. However, the intensity resolution is maintained at 10 bits so that the averaged data can then be input into the look-up table. Ideally, the intensity averaging should be carried out in the analogue domain by the CCD of the camera and this system can easily be adapted to function with such a camera. However, this facility is not currently available on camera and so averaging is carried out in the digital domain.

Having thus described the invention by reference to particular embodiments, it is to be appreciated that the described embodiments are exemplary only and are susceptible to modification and variation without departure from the spirit and scope of the invention as set forth in the appended claims. For example, whereas the described embodiments are for use with ceramics tiles, they could alternatively be used for grading and sorting plastics or cork tiles or other products such as wood blocks for example. The invention could also be applied to the inspection of textiles or other sheet material such as wall coverings, bank notes, postage stamps, fine art reproductions etc. for example. In addition, whereas the described embodiments utilize grey scale information from a monochromatic camera, the camera could be a colour camera and the image processing could be effected to sense colour variations. Furthermore, apparatus could be provided for detecting defects in the surface of the tile such as scratches and surface pits. These kinds of distortions could be sensed by projection of a predefined pattern onto the surface of the tile and optically sensing any distortions of the pattern due to these defects. Additionally, the communication link between the microcomputer and the image processor could be widened to carry more data, and as a result, the reconfiguration of the image processor for each feature determining algorithm could be carried out remotely from the microcontroller.

## Claims

1. An automatic inspection apparatus for classifying an article according to a surface characteristic of the article, the inspection apparatus comprising:
conveying means for conveying said article to an image sensing position;
illumination means for illuminating a surface of the article when it is at said image sensing position;
a camera for capturing an electrical image of said surface as the article passes through the image sensing position; and
processing means for processing the image to classify the article, said processing means being arranged to detect particular features of said image, and to determine the degree to which each feature is present in the image, and to classify the article on the basis of said determination;
said processing means comprising an image processor which is arranged to convert image data into a list of feature values and to classify the article on the basis of said list; and
said processing means comprising a computer programmed to execute a plurality of feature extraction algorithms and a ranking algorithm which ranks the feature extraction algorithms using as a criterion their efficiency in discriminating between grades of article, and a user interface enabling an operator to specify the type and grade of article when the apparatus is in a training mode and to switch between the training mode and a runtime mode.

2. An automatic inspection apparatus according to claim 1, wherein said article has a plurality of surface characteristics.

3. An automatic inspection apparatus according to claim 1 or 2, wherein the conveying means is arranged to convey the article to the image sensing position at a substantially constant speed and the camera is a high speed camera arranged to capture high definition images of the surface of the article as it moves through the image sensing position.

4. An automatic inspection apparatus according to claim 1 or 2 or 3, wherein said camera is a line scan camera arranged to capture images of parts of said article which can be electronically reconstructed into a complete image of said article.

5. An automatic inspection apparatus according to claim 3, wherein said camera is a time domain integration camera.

6. An automatic inspection apparatus according to any of the preceding claims, further comprising a high-speed shutter device for regulating the exposure of the camera.

7. An automatic inspection apparatus according to any of the preceding claims, further comprising controlling means for controlling the operation of the camera, for monitoring the environmental conditions under which the image is captured, and for communicating with processing apparatus the result of the classification procedure carried out by the processing means.

8. An automatic inspection apparatus according to any of the preceding claims, further comprising position determining means for tracking the movement of articles into, through and out of the image sensing position.

9. An automatic inspection apparatus according to claim 8, wherein said position determining means is arranged to align and guide said article through said image sensing position.

10. An automatic inspection apparatus according to claim 8 or 9 wherein the camera capture operation is arranged to be dependent upon outputs from said position determining means.

11. An automatic inspection apparatus according to any of the preceding claims, wherein said camera is housed in an enclosure which is arranged to allow the entry of light into the enclosure to said camera only via a window at said image sensing position, and said enclosure comprises substantially non-reflective light-absorbing internal walls.

12. An automatic inspection apparatus according to claim 11, wherein said illumination means comprises one or more high-frequency fluorescent lamps arranged as a light source within said enclosure for illuminating said article through the window of said enclosure.

13. An automatic inspection apparatus according to claim 12, wherein said illumination means comprises reflectors for reflecting light towards said window.

14. An automatic inspection apparatus according to any of the preceding claims, further comprising an image capture chamber which is arranged to control the environmental conditions under which said article passing therethrough is imaged.

15. An automatic inspection apparatus according to claim 14, wherein said chamber is arranged to inhibit the entry of light into the chamber and further comprises substantially non-reflective light-absorbing internal walls.

16. An automatic inspection apparatus according to claim 14 or 15, wherein said illumination means comprises a plurality of lamps arranged as a light source and a diffusion structure for providing diffuse light within the chamber.

17. An automatic inspection apparatus according to claim 16, wherein said diffusion structure comprises a coarse diffuser, a mirror and a fine diffuser, the mirror receiving light scattered by the coarse diffuser and reflecting the same to the fine diffuser.

18. An automatic inspection apparatus according to any of claims 14 to 17, further comprising means for inhibiting contamination of surfaces in said chamber with dust.

19. An automatic inspection apparatus according to any of the preceding claims, wherein said camera is positioned so that when an article is located at said image sensing position, the camera will receive only non-specularly reflected diffuse light from the surface of said article.

20. An automatic inspection apparatus according to any of the preceding claims, further comprising filter means associated with said camera, said filter means being arranged to optimize the sensitivity of the camera to the visible region of the electromagnetic spectrum.

21. An automatic inspection apparatus according to any of the preceding claims, wherein said camera comprises a zoom lens and has controllable zoom and focus facilities.

22. An automatic inspection apparatus according to any of the preceding claims, wherein said camera has controllable aperture facilities.

23. An automatic inspection apparatus according to any of the preceding claims, further comprising a calibration reference at said image sensing position for enabling calibration of the camera.

24. An automatic inspection apparatus according to claim 23, further comprising means for inhibiting contamination of a surface of said calibration reference with dust.

25. An automatic inspection apparatus according to any of the preceding claims, further comprising a cooling system which is arranged to cool the camera and computer environments.

26. An automatic inspection apparatus according to claim 25, wherein said cooling system comprises an air conditioning system.

27. An automatic inspection apparatus according to claim 25 or 26, wherein said cooling system comprises a heat pump and a heat sink which are used to cool said camera.

28. An automatic inspection apparatus according to any of the preceding claims wherein means are provided for enabling the camera image to be compensated to negate the effect of artefacts such as might for example arise due to non-uniform illumination of the workpiece or to variations in temperature or to compensate for variations in the output of various camera pixels.

29. An automatic sorting apparatus comprising an automatic inspection apparatus according to any of the preceding claims and a mechanical sorting device responsive to said automated inspection apparatus for physically sorting articles on the basis of the classification thereof as determined by said automatic inspection apparatus.

30. An automatic sorting apparatus according to claim 29, wherein said mechanical sorting device comprises an input sensor for determining when a previously classified article has reached said mechanical sorting device.

31. An automatic inspection apparatus or an automatic sorting apparatus according to any of the preceding claims, wherein said article comprises a ceramic tile.

## Patentansprüche

1. Automatisches Inspektionsgerät zur Klassifikation eines Artikels gemäß dessen Oberflächencharakteristik, umfassend:
eine Beförderungseinrichtung zur Beförderung des Artikels zu einer Bildabtastposition;
eine Beleuchtungseinrichtung zur Beleuchtung der Oberfläche des Artikels, wenn sich dieser in der Bildabtastposition befindet;
eine Kamera zum Erfassen eines elektrischen Abbildes der Oberfläche, während der Artikel die Bildabtastposition passiert; und
eine Bearbeitungseinrichtung zur Bearbeitung des Bildes, um den Artikel zu klassifizieren, wobei die Bearbeitungseinrichtung so ausgelegt ist, daß sie bestimmte Merkmale des Bildes erfaßt und den Grad bestimmt, zu dem das jeweilige Merkmal im Bild vorliegt, und den Artikel auf der Grundlage dieser Bestimmung klassifiziert; wobei
die Bearbeitungseinrichtung einen Bildprozessor enthält, der zur Konvertierung der Bilddaten in eine Liste von Merkmalswerten und zur Klassifizierung des Artikels auf der Grundlage dieser Liste ausgelegt ist; und
die Bearbeitungseinrichtung einen Computer, der auf die Ausführung einer Mehrzahl von Merkmalextraktionsalgorithmen und eines Einstufungsalgorithmuses programmiert ist, der die Merkmalextraktionsalgorithmen einstuft, indem er deren Effizienz in der Unterscheidung zwischen den Abstufungen eines Artikels als Kriterium verwendet, und eine Benutzerschnittstelle umfaßt, die es einem Operator ermöglicht, den Typ und die Abstufung eines Artikels zu spezifizieren, wenn sich der Apparat in einem Trainingsmodus befindet, und zwischen dem Trainingsmodus und einem Laufzeitmodus umzuschalten.

2. Automatisches Inspektionsgerät nach Anspruch 1, wobei der Artikel eine Mehrzahl von Oberflächencharakteristiken aufweist.

3. Automatisches Inspektionsgerät nach Anspruch 1 oder 2, wobei die Beförderungseinrichtung für die Beförderung des Artikels zur Bildabtastposition mit im wesentlichen konstanter Geschwindigkeit ausgelegt ist, und die Kamera eine Hochgeschwindigkeitskamera darstellt, die zur Erfassung hochauflösender Bilder der Oberfläche des Artikels ausgelegt ist, wenn dieser durch die Bildabtastposition läuft.

4. Automatisches Inspektionsgerät nach Anspruch 1, 2 oder 3, wobei die Kamera in einer Linienabtast-Kamera besteht, die zum Erfassen von Bildern von Artikelbereichen ausgelegt ist, die elektronisch zu einem Gesamtbild des Artikels rekonstruiert werden können.

5. Automatisches Inspektionsgerät nach Anspruch 3, wobei die Kamera in einer Zeitbereichs-Integrationskamera besteht.

6. Automatisches Inspektionsgerät nach einem der vorhergehenden Ansprüche, das außerdem eine Hochgeschwindigkeits-Verschlußvorrichtung zur Einstellung der Belichtung der Kamera aufweist.

7. Automatisches Inspektionsgerät nach einem der vorhergehenden Ansprüche, das außerdem eine Steuervorrichtung zur Steuerung des Kamerabetriebs, zur Aufzeichnung der Umweltbedingungen, unter denen das Bild aufgenommen wurde, und zur Übertragung des Ergebnisses der Klassifikationsprozedur, die von der Bearbeitungseinrichtung ausgeführt wurde, zu einer Verarbeitungsvorrichtung aufweist.

8. Automatisches Inspektionsgerät nach einem der vorhergehenden Ansprüche, das außerdem eine Positionsbestimmungseinrichtung zum Verfolgen der Bewegung von Artikeln in, durch und aus der Bildabtastposition aufweist.

9. Automatisches Inspektionsgerät nach Anspruch 8, wobei die Positionsbestimmungsvorrichtung für das Ausrichten und Fuhren des Artikels durch die Bildabtastposition ausgelegt ist.

10. Automatisches Inspektionsgerät nach Anspruch 8 oder 9, wobei die Kameraerfassungsbetrieb von den Ausgaben der Positionsbestimmungsvorrichtung abhängt.

11. Automatisches Inspektionsgerät nach einem der vorhergehenden Ansprüche, wobei die Kamera von einem Gehäuse aufgenommen ist, das den Eintritt von Licht zur Kamera nur über ein Fenster an der Bildabtastposition erlaubt, und das im wesentlichen nicht-reflektierende lichtabsorbierende Innenwände aufweist.

12. Automatisches Inspektionsgerät nach Anspruch 11, wobei die Beleuchtungseinrichtung eine oder mehrere Hchfrequenzleuchtstofflampen aufweist, die als Lichtquelle innerhalb des Gehäuses zur Beleuchtung des Artikels durch das Gehäusefenster dienen.

13. Automatisches Inspektionsgerät nach Anspruch 12, wobei die Beleuchtungseinrichtung Reflektoren zum Reflektieren des Lichts auf das Fenster aufweist.

14. Automatisches Inspektionsgerät nach einem der vorhergehenden Ansprüche, das außerdem eine Bilderfassungskammer aufweist, die zur Steuerung der Umweltbedingungen, unter denen der durchlaufende Artikel abgebildet wird, ausgelegt ist.

15. Automatisches Inspektionsgerät nach Anspruch 14, wobei die Kammer den Eintritt von Licht in die Kammer hemmt und außerdem im wesentlichen nicht-reflektierende lichtabsorbierende Innenwände aufweist.

16. Automatisches Inspektionsgerät nach Anspruch 14 oder 15, wobei die Beleuchtungseinrichtung eine Mehrzahl von als Lichtquelle ausgelegten Lampen und eine Streustruktur zum Bereitstellen diffusen Lichts innerhalb der Kammer aufweist.

17. Automatisches Inspektionsgerät nach Anspruch 16, wobei die Streustruktur einen groben Diffusor, einen Spiegel und einen feinen Diffusor aufweist, wobei der Spiegel vom groben Diffusor gestreutes Licht auffängt und zum feinen Diffusor reflektiert.

18. Automatisches Inspektionsgerät nach einem der Ansprüche 14 bis 17, das außerdem eine Einrichtung zur Hemmung der Oberflächenkontamination durch Staub in der Kammer aufweist.

19. Automatisches Inspektionsgerät nach einem der vorhergehenden Ansprüche, wobei die Kamera so positioniert ist, daß sie, wenn ein Artikel sich in der Bildabtastposition befindet, nur nicht-spiegelreflektiertes diffuses Licht von der Artikeloberfläche empfängt.

20. Automatisches Inspektionsgerät nach einem der vorhergehenden Ansprüche, das außerdem eine der Kamera zugeordnete Filtereinrichtung aufweist, die zur Optimierung der Kamerasensitivität auf den sichtbaren Bereich des elektromagnetischen Spektrums ausgelegt ist.

21. Automatisches Inspektionsgerät nach einem der vorhergehenden Ansprüche, wobei die Kamera eine Zoom-Linse, einen steuerbaren Zoom und Fokussiervorrichtungen aufweist.

22. Automatisches Inspektionsgerät nach einem der vorhergehenden Ansprüche, wobei die Kamera steuerbare Aperturvorrichtungen aufweist.

23. Automatisches Inspektionsgerät nach einem der vorhergehenden Ansprüche, das außerdem eine Kalibrierungsreferenz bei der Bildabtastposition zur Kalibrierung der Kamera aufweist.

24. Automatisches Inspektionsgerät nach Anspruch 23, das außerdem eine Einrichtung zur Hemmung der Oberflächenkontamination der Kalibrierungsreferenz mit Staub aufweist.

25. Automatisches Inspektionsgerät nach einem der vorhergehenden Ansprüche, das außerdem ein Kühlsystem zur Kühlung der Kamera- und Computerumgebung aufweist.

26. Automatisches Inspektionsgerät nach Anspruch 25, wobei das Kühlsystem ein Klimatisierungssystem aufweist.

27. Automatisches Inspektionsgerät nach Anspruch 25 oder 26, wobei das Kühlsystem eine Wärmepumpe und einen Kühlkörper zur Kühlung der Kamera aufweist.

28. Automatisches Inspektionsgerät nach einem der vorhergehenden Ansprüche, wobei Vorrichtungen vorgesehen sind, die es ermöglichen, das Kamerabild dahingehend zu kompensieren, daß der Effekt von Artefakten, wie sie z.B. aus der nicht gleichförmigen Beleuchtung des Arbeitsgegenstandes oder wegen Temperaturvariationen entstehen, unterdrückt wird oder daß Variationen in der Ausgabe verschiedener Kamerapixel ausgeglichen werden.

29. Automatisches Sortiergerät mit einem automatischen Inspektionsgerät nach einem der vorhergehenden Ansprüche und einer mechanischen Sortiervorrichtung, die in Reaktion auf das automatische Inspektionsgerät Artikel, basierend auf deren Klassifikation, wie sie vom automatischen Inspektionsgerät bestimmt wurde, physisch sortiert.

30. Automatisches Sortiergerät nach Anspruch 29, wobei die mechanische Sortiervorrichtung einen Eingangssensor aufweist, der bestimmt, wann ein zuvor klassifizierter Artikel die mechanische Sortiervorrichtung erreicht hat.

31. Automatisches Inspektionsgerät oder automatisches Sortiergerät nach einem der vorhergehenden Ansprüche, wobei der Artikel eine Keramikfliese aufweist.

## Revendications

1. Appareil d'inspection automatique pour classer un objet en fonction d'une caractéristique de surface de celui-ci, l'appareil d'inspection comprenant :
des moyens de transport pour transporter ledit objet jusqu'à un poste de détection d'image ;
des moyens d'éclairage pour éclairer une surface de l'objet lorsque celui-ci est au niveau dudit poste de détection d'image ;
une camera pour saisir une image électrique de ladite surface lorsque l'objet passe à travers le poste de détection d'image ; et
des moyens de traitement pour traiter l'image afin de classer l'objet, lesdits moyens de traitment étant conçus pour détecter des caractéristiques particulières de ladite image et pour déterminer le degré de présence de chaque caractéristique dans l'image, afin de classer l'objet en fonction de ladite détermination ;
lesdits moyens de traitement comprenant un processeur d'image conçu pour convertir des données d'image en une liste de valeurs de caractéristiques et pour classer l'objet en fonction de ladite liste ; et
lesdits moyens de traitement comprenant un ordinateur programme pour exécuter plusieurs algorithmes d'extraction de caractéristiques et un algorithme de hiérarchisation qui hiérarchise les algorithmes d'extraction de caractéristiques en utilisant comme critère leur efficacité à établir une distinction entre des qualités d'objets, et une interface d'utilisateur permettant à un opérateur de spécifier le type et la qualité d'objets lorsque l'appareil est en mode d'apprentissage et de permuter entre le mode d'apprentissage et un mode de fonctionnement.

2. Appareil d'inspection automatique selon la revendication 1, dans lequel ledit objet présente plusieurs caractéristiques de surface.

3. Appareil d'inspection automatique selon la revendication 1 ou 2, dans lequel les moyens de transport sont conçus pour transporter l'objet jusqu'au poste de détection d'image à une vitesse sensiblement constante, la caméra étant une caméra très rapide conçue pour saisir des images de haute définition de la surface de l'objet lorsque celui-ci passe à travers le poste de détection d'image.

4. Appareil d'inspection automatique selon la revendication 1, 2 ou 3, dans lequel ladite caméra est une caméra à balayage ligne par ligne conçue pour saisir des images de parties dudit objet qui peuvent être reconstituées électroniquement en une image complète de celui-ci.

5. Appareil d'inspection automatique selon la revendication 3, dans lequel ladite caméra est une caméra à intégration dans le domaine temporel.

6. Appareil d'inspection automatique selon l'une quelconque des revendications précédentes, comprenant également un dispositif obturateur à grande vitesse pour régler la durée d'exposition de la caméra.

7. Appareil d'inspection automatique selon l'une quelconque des revendication précédentes, comprenant également des moyens de commande pour commander le fonctionnement de la caméra, pour surveiller les conditions environnementales dans lesquelles l'image est saisie et pour communiquer à l'aide de l'appareil de traitement le résultat de la procédure de classement exécutée par les moyens de traitement.

8. Appareil d'inspection automatique selon l'une quelconque des revendications précédentes, comprenant également des moyens de détermination de position pour suivre le mouvement d'objets entrant dans le poste de détection d'image, le traversant et sortant de celui-ci.

9. Appareil d'inspection automatique selon la revendication 8, dans lequel lesdits moyens de détermination de position sont conçues pour aligner et guider ledit objet à travers ledit poste de détection d'image.

10. Appareil d'inspection automatique selon la revendication 8 ou 9, dans lequel l'opération de saisie de la caméra est conçue pour être dépendante de sorties provenant desdits moyens de détermination de position.

11. Appareil d'inspection automatique selon l'une quelconque des revendications précédentes, dans lequel ladite caméra est logée dans une enceinte conçue pour que la lumière puisse y pénétrer en direction de ladite caméra uniquement par l'intermédiaire d'une fenêtre prévue au niveau dudit poste de détection d'image, ladite enceints comprenant des parois internes absorbant la lumière et sensiblement non réfléchissantes.

12. Appareil d'inspection automatique selon la revendication 11, dans lequel lesdits moyens d'éclairage comprennent au moins une lampe fluorescente à haute fréquence prévue comme source de lumière à l'intérieur de ladite enceinte pour éclairer ledit objet à travers la fenêtre de cette dernière.

13. Appareil d'inspection automatique selon la revendication 12, dans lequel lesdits moyens d'éclairage comprennent des réflecteurs pour réfléchir la lumière vers ladite fenêtre.

14. Appareil d'inspection automatique selon l'une quelconque des revendications précédentes, comprenant également une chambre de saisie d'image conçue pour gérer les conditions environnementales d'imagerie dudit objet passant à travers elle.

15. Appareil d'inspection automatique selon la revendication 14, dans lequel ladite chambre est conçue pour empêcher la lumière d'y pénétrer et comprend également des parois internes absorbant la lumière et sensiblement non réfléchissante.

16. Appareil d'inspection automatique selon la revendication 14 ou 15, dans lequel lesdits moyens d'éclairage comprennent de multiples lampes prévues comme source de lumière et une structure de diffusion pour fournir une lumière diffuse à l'intérieur de la chambre.

17. Appareil d'inspection automatique selon la revendication 16, dans lequel ladite structure de diffusion comprend un moyen de diffusion grossière, un miroir et un moyen de diffusion fine, le miroir recevant la lumière dispersée par le moyen de diffusion grossière et la réfléchissant sur le moyen de diffusion fine.

18. Appareil d'inspection automatique selon l'une quelconque des revendications 14 à 17, comprenant également des moyens pour empêcher une contamination de surfaces au sein de ladite chambre par la poussière.

19. Appareil d'inspection automatique selon l'une quelconque des revendications précédentes, dans lequel ladite caméra est positionnée pour, lorsqu'un objet est situé au niveau dudit poste de détection d'image, ne recevoir de la surface dudit objet qu'une lumière diffuse non soumise à une réflexion spéculaire.

20. Appareil d'inspection automatique selon l'une quelconque des revendications précédentes, comprenant également des moyens formant filtres associés à ladite caméra, les moyens formant filtres étant conçus pour optimiser la sensibilité de la caméra au domaine visible du spectre électromagnétique.

21. Appareil d'inspection automatique selon l'une quelconque des revendications précédentes, dans lequel ladite caméra comprend une lentille à focale variable et comporte des moyens d'exécution de zoom et de mise au point réglables.

22. Appareil d'inspection automatique selon l'une quelconque des revendications précédentes, dans lequel ladite caméra comporte des moyens d'ouverture réglables.

23. Appareil d'inspection automatique selon l'une quelconque des revendications précédentes, comprenant également une référence d' étalonnage au niveau dudit poste de détection d'image pour permettre un étalonnage de la caméra.

24. Appareil d'inspection automatique selon la revendication 23, comprenant égalament des moyens pour empêcher une contamination d'une surface de ladite référence d'étalonnage par la poussière.

25. Appareil d'inspection automatique selon l'une quelconque des revendications précédentes, comprenant également un système de refroidissement conçu pour refroidir les environnements de la caméra et de l'ordinateur.

26. Appareil d'inspection automatique selon la revendication 25, dans lequel ledit système de refroidissement comprend un système de conditionnement d'air.

27. Appareil d'inspection automatique selon la revendication 25 ou 26, dans lequel ledit système de refroidissement comprend une pompe à chaleur et un dissipateur de chaleur servant à refroidir ladite caméra.

28. Appareil d'inspection automatique selon l'une quelconque des revendications précédentes, dans lequel il est prévu des moyens pour permettre de compenser l'image de la caméra afin d'annuler l'effet d'artefacts tels que ceux qui pourraient par exemple résulter d'un éclairage non uniforme de la pièce ou de variations de température, ou pour compenser des variations de la sortie de différents pixels de la caméra.

29. Appareil de tri automatique comprenant un appareil d'inspection automatique selon l'une quelconque des revendications précédentes et un dispositif de tri mécanique sensible audit appareil d'inspection automatique pour trier physiquement des objets en fonction du classement de ceux-ci tel qu'il a été déterminé par ledit appareil d'inspection automatique.

30. Appareil de tri automatique selon la revendication 29, dans lequel ledit dispositif de tri mécanique comprend un capteur d'entrée pour déterminer lorsqu'un objet classé précédemment a atteint ledit dispositif de tri mécanique.

31. Appareil d'inspection automatique ou appareil de tri automatique selon l'une quelconque des revendications précédentes, dans lequel ledit objet comprend un carreau en céramique.
